# EUROPÄISCHE PATENTANMELDUNG

(11) **EP 2 777 923 A1**
(43) Veröffentlichungstag der Anmeldung: **17.09.2014**
(21) Anmeldenummer: 14169837.3
(22) Anmeldetag: 30.11.2009
(51) Int. Cl.: B29D 30/66, B05C 3/02, B05C 3/08, B05C 3/10, B60C 11/16

(54) **Verfahren und Vorrichtung zum Beschichten von Spikes**

(30) Priorität: 27.05.2009 DE 102009025874
(62) Teilanmeldung aus: 09177433.1
(71) Anmelder: Continental Reifen Deutschland GmbH, 30165 Hannover (DE)
(72) Erfinder: Kendziorra, Norbert, 30827 Garbsen (DE); Schlittenhard, Jan, 30900 Wedemark (DE); Kötter, Maik, 49733 Haren (Ems) (DE)
(74) Vertreter: Finger, Karsten

(57) **Zusammenfassung**

Die Erfindung betrifft ein Verfahren zum Verankern von Spikes (7) in einem Laufstreifen eines Fahrzeugluftreifens, wobei die Spikes (7, 7') jeweils einen Basisteil (8, 8'), einen Spikekörper (9, 9') und einen Pin (10, 10') aufweisen und in Spikelöcher (6) im Laufstreifen eingebracht werden, welche bei der Vulkanisation des Reifens in einer Heizpresse eingeformt worden sind.

Die Spikes (7) werden in eine in Dreh- oder Rüttelbewegung versetzbare Trommel (17) als Schüttgut eingebracht, in der Trommel (17) mit dem Haftsystem besprüht und anschließend in oder außerhalb der Trommel (17) getrocknet.

## Beschreibung

Die Erfindung betrifft ein Verfahren zum Beschichten von Spikes zum nachfolgenden Verankern in einem Laufstreifen eines Fahrzeugluftreifens, wobei die Spikes jeweils einen Basisteil, einen Spikekörper und einen Pin aufweisen und in Spikelöcher im Laufstreifen eingebracht werden, welche bei der Vulkanisation des Reifens in einer Heizpresse eingeformt worden sind, wobei die Spikes vor dem Einbringen in den Laufstreifen mit einem Haftsystem beschichtet werden und unter Pressung des Gummimaterials in die Spikelöcher eingebracht werden, wobei anschließend das Haftsystem bei in den Spikelöchern positionierten Spikes durch Wärme aktiviert wird, sodass eine Haftverbindung der Spikes zum Gummimaterial des Laufstreifens hergestellt wird. Die Erfindung betrifft ferner eine Vorrichtung zur Beschichtung von Spikes mit einem Haftsystem.

Spikes werden üblicherweise durch eine Kombination aus Formschluss und Klemmung in den Spikelöchern des Laufstreifens von Fahrzeugluftreifen gehalten und weisen einen Spikekörper aus Metall, insbesondere Stahl, oder aus Kunststoff auf, in welchem der über die Laufstreifenoberfläche vorstehende Spikepin, welcher insbesondere aus einem Hartmetall besteht, gehalten ist. Spikelöcher und Spikekörper sind geometrisch derart ausgelegt, dass die Pressung des Laufstreifengummis die Spikes an einem unerwünschten Verlassen des Laufstreifens weitgehend hindert.

Aus der JP7001605-A ist ein Verfahren zur Verankerung von mit einer Haftlösung beschichteten Spikes in einem vorvulkanisierten Laufstreifen bekannt, wobei durch Wärmezufuhr die Haftlösung aktiviert wird.

Die GB 968003 A offenbart ein Verfahren zur Herstellung eines bespikten Fahrzeugluftreifens, bei welchem die Spikes mit einer Haftlösung behandelt und nachfolgend über eine Kaltvulkanisation in den Laufstreifen eingebunden werden.

Der Erfindung liegt die Aufgabe zugrunde, ein Verfahren und eine Vorrichtung zur Verfügung zu stellten, die auf rationelle Weise eine besonders gleichmäßige Beschichtung von Spikes mit einem Haftsystem ermöglichen.

Was das Verfahren betrifft wird die gestellte Aufgabe erfindungsgemäß dadurch gelöst, dass die Spikes in eine in Dreh- oder Rüttelbewegung versetzbare Trommel als Schüttgut eingebracht werden, in der Trommel mit dem Haftsystem besprüht werden und anschließend in oder außerhalb der Trommel getrocknet werden.

Die Vorrichtung gemäß der Erfindung weist eine in Dreh- oder Rüttelbewegung versetzbare Trommel, in welche die zu beschichtenden Spikes als Schüttgut eingebracht werden, zumindest eine Einfülleinrichtung zum Einsprühen der Spikes in der Trommel mit dem Haftsystem, gegebenenfalls zur Vorbehandlung mit einem Primer, und eine Einrichtung zum Trocknen der beschichteten Spikes in oder außerhalb der Trommel auf.

Die erfindungsgemäße Vorrichtung und das erfindungsgemäße Verfahren erlauben eine besonders effektive, rationell durchführbare und gleichmäßige Beschichtung der Spikes.

Zum Sicherstellen einer besonders guten Haftung werden die Spikes vor dem Besprühen mit dem Haftsystem mit einem Primer besprüht.
Weitere Merkmale, Vorteile und Einzelheiten der Erfindung werden anhand der schematischen Zeichnung, die Ausführungsbeispiele darstellt, näher beschrieben. Dabei zeigen
Fig. 1 eine Draufsicht auf einen Abschnitt eines profilierten Laufstreifens eines Fahrzeugluftreifens mit unbespikten Spikelöchern,
Fig. 1a einen Schnitt entlang der Linie I-I der Fig. 1,
Fig. 2 den Laufstreifenabschnitt aus Fig. 1 mit eingesetzten Spikes,
Fig. 2a einen Schnitt entlang der Linie II-II der Fig. 2,
Fig. 3 ein Basiskonzept einer Trommelbeschichtungsvorrichtung für Spikes,
Fig. 4a und Fig. 4b Ansichten einer Kontaktheizvorrichtung,
Fig. 4c eine Variante der Kontaktheizvorrichtung,
Fig. 5a bis Fig. 5d unterschiedliche Ansichten einer Ausführungsvariante einer Induktionsheizeinrichtung,
Fig. 6 eine über einem Profilblock positionierte Induktionsheizeinrichtung und
Fig. 7a bis Fig. 7c unterschiedliche Ansichten einer mehrere Induktionsheizeinrichtungen aufweisenden Induktionsheizvorrichtung.

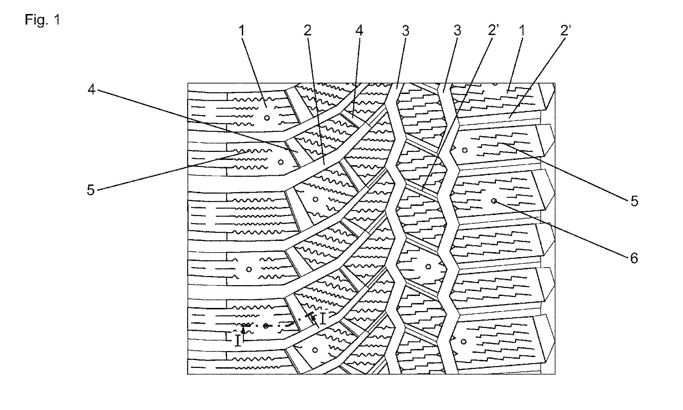

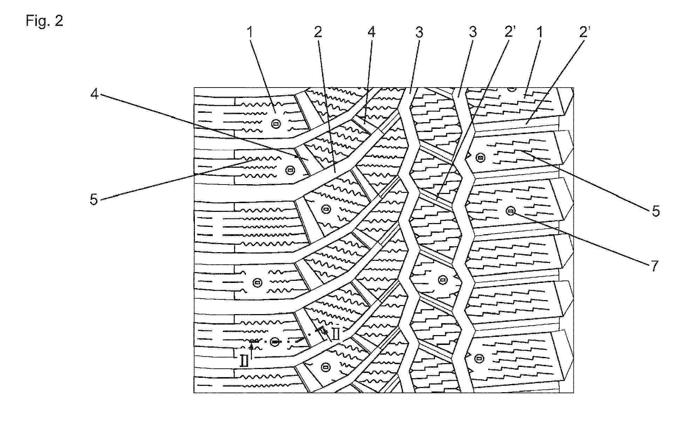

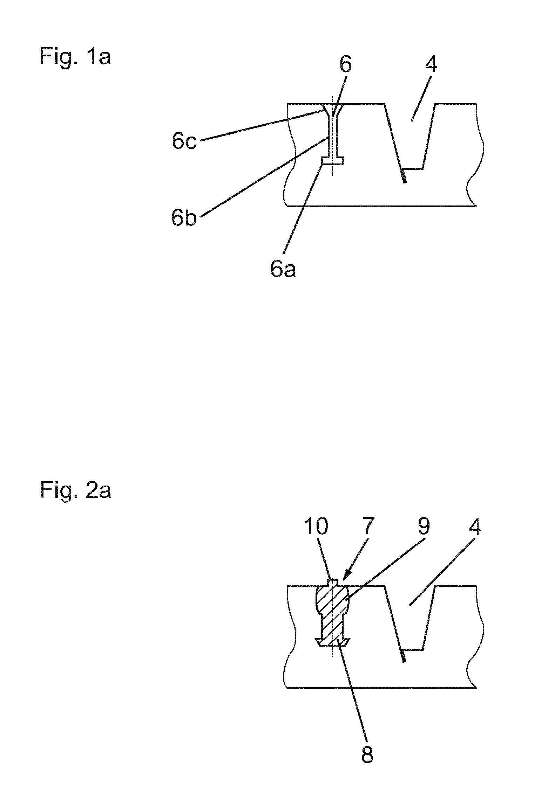

Fig. 1 und 2 zeigen einen profilierten Laufstreifen eines für Personenkraftwagen vorgesehenen Fahrzeugluftreifens, welcher für einen Einsatz unter winterlichen Fahrbedingungen, insbesondere auf Schnee oder Eis, besonders geeignet ist. Der Laufstreifen besteht aus einer Vielzahl von Profilblöcken 1, welche, in Reihen angeordnet, über den Umfang des Reifens verlaufen, wobei Quernuten 2, 2', Umfangsnuten 3 und Schrägrillen 4 die einzelnen Profilblöcke 1 begrenzen bzw. voneinander trennen. Der Verlauf der Nuten 2, 2', 3 und Rillen 4 bestimmt die in Draufsicht vorliegende unterschiedliche Gestalt der Profilblöcke 1. Wie bei Winterreifen üblich sind die Profilblöcke 1 jeweils mit einer Vielzahl von zumindest im Wesentlichen in Profilquerrichtung orientierten Einschnitten 5 versehen, die bei der gezeigten Ausführungsform in Draufsicht entweder einem wellenförmigen oder im Wesentlichen zick-zack-förmigen Verlauf aufweisen. Solche Einschnitte 5 weisen üblicherweise eine Breite zwischen 0,3 mm und 0,6 mm auf und unterstützen die Griff-, Brems- und Traktionseigenschaften des Reifens auf Schnee und Eis. Nachdem die Ausgestaltung des Laufstreifens nicht Gegenstand dieser Erfindung ist, wird auf sie im Detail nicht näher eingegangen.

In einer Anzahl von Profilblöcken 1, insbesondere in weiter laufstreifenaußenseitig positionierten Profilblöcken 1, sind Spikelöcher 6 vorhanden, welche bei der Vulkanisation des Rohreifens in einer Vulkanisationsform durch entsprechend vorgeformte Formvorsprünge ausgebildet werden. Die im Laufstreifen ausgebildeten Spikelöcher 6 weisen im radialen Schnitt gemäß Fig. 1a einen Basisabschnitt 6a, einen zentralen, insbesondere kreiszylindrisch und sich in radialer Richtung sich erstreckenden zentralen Abschnitt 6b und einen an der Profiloberseite mündenden Abschnitt 6c, welcher zur Laufstreifenoberfläche zu breiter wird, auf. Die Ausführung der Spikelöcher 6 ist an sich bekannt und nicht Gegenstand der Erfindung.

Fig. 2 zeigt eine Draufsicht auf den Laufstreifenabschnitt mit eingesetzten Spikes 7, Fig. 2a einen Querschnitt mit einem in einem Spikeloch 6 positionierten Spike 7.

Die Spikes 7 weisen einen Basisteil 8 auf, auf welchem ein insbesondere im Wesentlichen kreiszylindrischer Spikekörper 9 sitzt. Im Spikekörper 9 ist der ebenfalls zylindrische, jedoch mit einem kleineren Durchmesser als der Spikekörper 9 versehene Pin 10 verankert. Der Basisteil 8 kann in Draufsicht kreisrund oder oval bzw. länglich ausgeführt sein, wobei ovale bzw. längliche Basisteile üblicherweise in Bezug auf die Umfangsrichtung des Laufstreifens im fertigen Reifen derart verankert werden, dass die Längserstreckung des Basisteils 8 mit der Umfangsrichtung des Reifens übereinstimmt.

Zumindest die Basisteile 8 und die Spikekörper 9 der Spikes 7 werden mit einem Haftsystem, bei metallischen Spikes mit einem Gummi-Metall-Haftsystem, versehen bzw. beschichtet, wobei das Haftsystem nach dem Einsetzen der Spikes 7 in den Laufstreifen durch eine gesonderte Wärmebehandlung aktiviert wird. Es kann eines der bekannten Haftsysteme, bei Gummi-Metall-Haftsystemen beispielsweise Parlock, Chemlock oder Chemosil, verwendet werden. Die Beschichtung der Spikes 7 erfolgt im Anschluss an eine mechanische oder chemische Reinigung, wobei die Dicke der am Spike 7 befindlichen, trockenen Haftsystemschicht zwischen 2 µm und 60 µm beträgt.

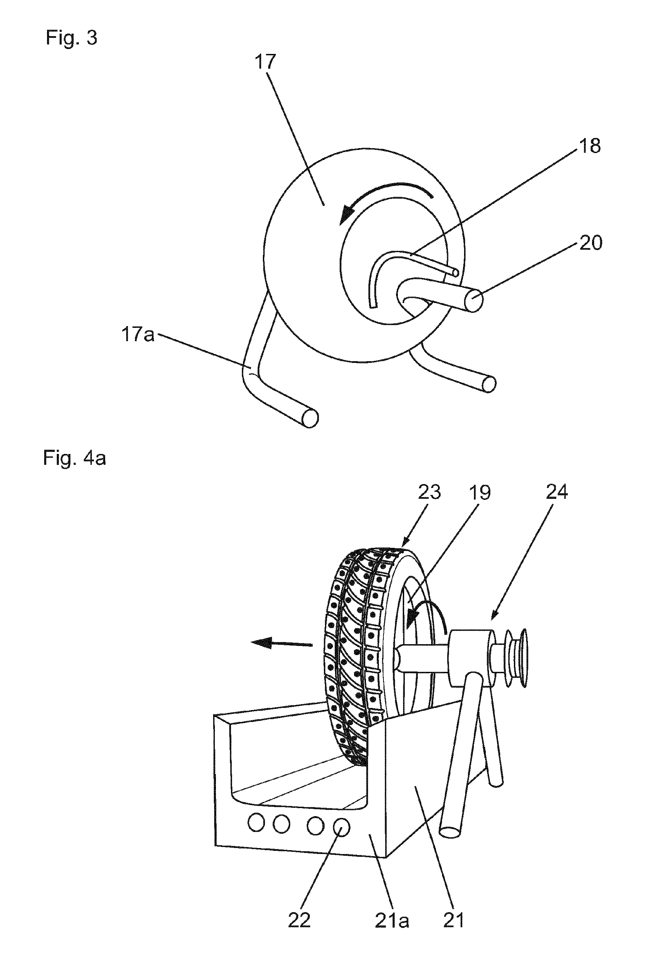

Fig. 3 zeigt das Grundprinzip einer erfindungsmäßigen Trommelbeschichtungsvorrichtung zu Beschichtung von Spikes 7 mit einem Haftsystem. Die dargestellte Trommelbeschichtungsvorrichtung weist eine in eine Dreh- oder Rüttelbewegung versetzbare, auf einem Gestell 17a gelagerte Trommel 17 auf, in welcher die mechanisch oder chemisch vorgereinigten Spikes 7 quasi als Schüttgut eingebracht werden. Über eine Einfülleinrichtung 18, insbesondere einen Schlauch oder ein Rohr, wird zuerst ein Primer und anschließend das Haftsystem, beides in Lösung, eingebracht und aufgesprüht. Nach der Beschichtung werden etwaige Lösungsmittelreste durch Zufuhr von Warmluft, welche über eine Zuführung 20, ebenfalls ein Schlauch oder ein Rohr, eingeblasen wird, abgetrocknet. Die trockenen und beschichteten Spikes 7 werden der Trommel 17 entnommen.

Die beschichteten Spikes 7 werden in die Spikelöcher 6 des bereits in herkömmlicher Weise hergestellten, vulkanisierten und somit fertigen Reifens, ebenfalls auf herkömmliche Weise, eingebracht. Anschließend erfolgt eine Aktivierung des Haftsystems durch Erwärmung der Spikes 7 auf eine Temperatur zwischen 90 °C und 180 °C für einen kurzen Zeitraum zwischen einer Sekunde und mehreren Sekunden.

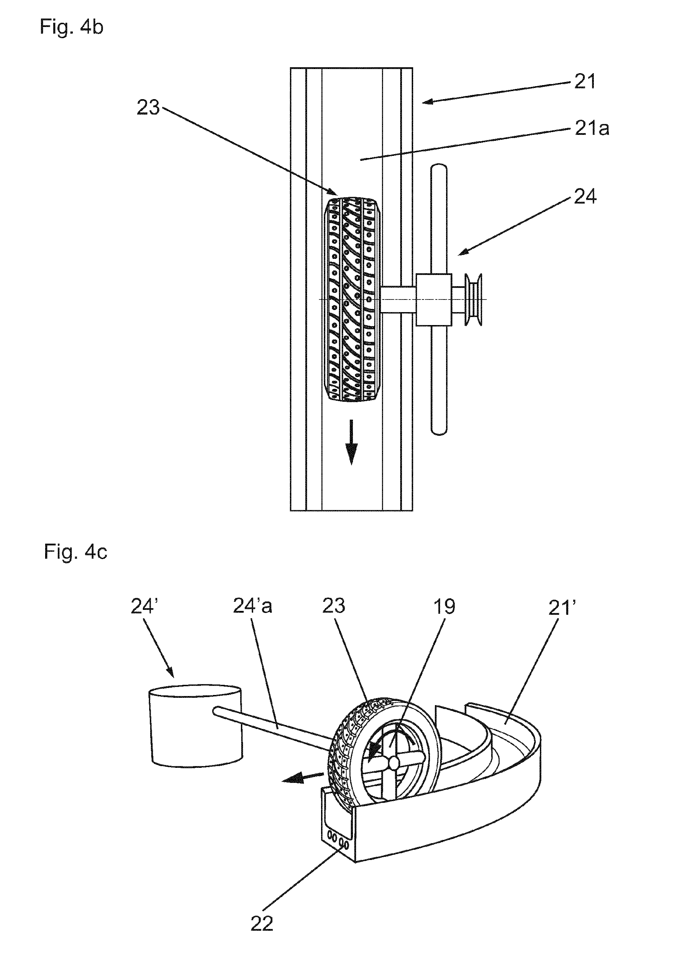

Fig. 4a und Fig. 4b zeigen eine Möglichkeit der Aktivierung des Haftsystems mittels einer Kontaktheizvorrichtung, welche eine im Querschnitt U-förmige Wanne 21 aufweist, die in einer Länge ausgeführt ist, die zumindest dem Umfang der zu behandelnden Reifen entspricht. Die Wanne 21 besteht aus einem gut wärmeleitfähigen Material, insbesondere einer Metalllegierung. Im Boden 21a der Wanne 21 ist ein System von Rohrleitungen 22 eingelassen, in welche zum Erhitzen der Wanne 21 heißer Dampf oder ein anderes erhitztes gasförmiges oder flüssiges Medium geleitet wird. Alternativ kann die Wanne 21 mittels eines im Boden 21a eingelassenen elektrischen Heizsystems erhitzt werden.

Zusätzlich kann in die Wanne 21 zur Verbesserung des Wärmetransportes eine Flüssigkeit, beispielsweise eine Salzschmelze oder eine Metallschmelze, vorzugsweise eine bei niedrigerer Temperatur schmelzende Legierung wie Sn₆₀PbCu₂, eingefüllt werden.

Der auf einer Felge befindliche Reifen 23 wird drehbar an einem Gestell 24 angeordnet, welches entlang der Wanne 21 bewegt wird, sodass der Reifen 23 in der Wanne 21 abrollt. Dabei wird das Haftsystem der Spikes 7 aktiviert und eine feste und dauerhafte Verbindung der Spikes 7 mit dem Laufstreifengummi hergestellt. Der Reifen 23 wird aus der Wanne 21 entfernt, von etwaigen Flüssigkeitsresten befreit und gegebenenfalls mit Wasser gewaschen.

Fig. 4c zeigt eine Variante der Kontaktheizvorrichtung. Die im Querschnitt etwa U-förmige Wanne 21' ist entlang eines Kreisbogenabschnittes gekrümmt, im Mittelpunkt des diesbezüglichen Kreises befindet sich der Drehmittelpunkt des Gestells 24', welches eine mit der Felge des Reifens 23 verbundene Stange 24'a aufweist. Durch Drehen des Gestells 24' im Kreismittelpunkt rollt der Reifen 23 in der Wanne 21' ab.

Bei einer weiteren Ausführungsform wird das auf die Spikes 7 aufgebrachte Haftsystem durch Induktionsheizen aktiviert. Induktionsheizen basiert auf dem Prinzip der Energiezufuhr über elektromagnetische Induktion, wobei eine Spule von passenden Abmessungen in die Nähe der aufzuheizenden Metallteile gebracht wird. An diese Spule wird Wechselstrom mit mittlerer bis hoher Frequenz angelegt, sodass in den Metallteilen parasitäre Ströme entstehen, deren Intensität gesteuert werden kann. Die Heizung erfolgt ohne direkten Kontakt und wirkt nur auf die metallischen Teile, die bearbeitet werden sollen. Die Übertragung ist sehr effizient, da keine Wärme verloren geht.

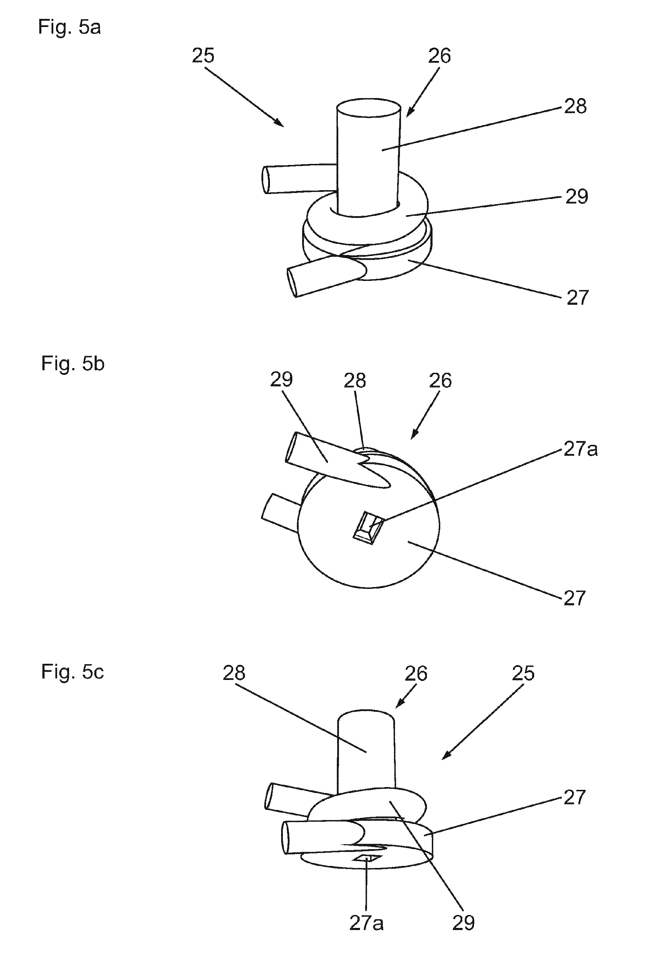

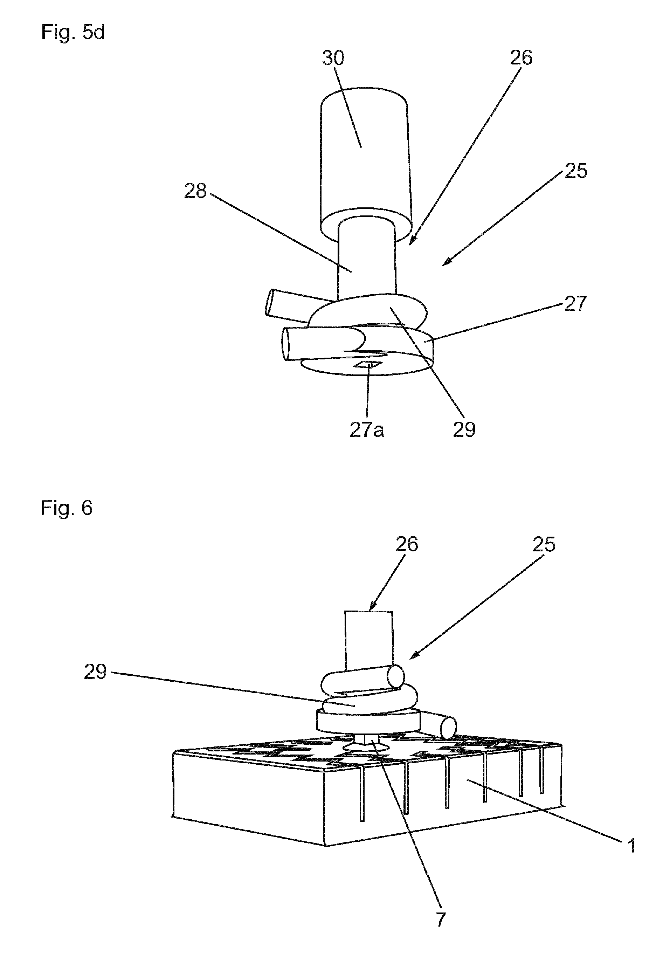

Fig. 5a bis Fig. 5c zeigen den grundsätzlichen Aufbau einer zum Beheizen eines einzelnen Spikes 7 geeigneten Induktionsheizeinrichtung 25. Diese weist einen Träger 26 auf, welcher aus einer Basisscheibe 27 und aus einer mit diesem verbundenen, zylindrischen Stütze 28 besteht. Der Träger 26 besteht aus einem nichtmetallischen, mechanisch festen Material, beispielsweise Keramik, PTFE oder PTS. Eine Induktionsspule 29 umläuft spiralförmig die Stütze 28, eines ihrer Enden ist im Basisteil 27 eingebettet. Der Basisteil 27 weist an seiner Unterseite mittig eine Ausnehmung 27a auf, die ein Aufsetzen der Induktionsheizeinrichtung 25 auf den Pin 10 eines bereits im Laufstreifen positionierten Spikes 7 gestattet. Die Hochfrequenzzufuhr erfolgt bei aufgesetzter Induktionsheizeinrichtung 25 mittels nicht gezeigter flexibler elektrischer Leiter. Zusätzlich kann die Induktionsheizeinrichtung 25, wie es Fig. 5d zeigt, mittels eines Positionierelementes 30, welches auf die Stütze 28 aufgesetzt wird, auf einem Spike 7 positioniert werden, wobei der Träger 26 unter geringem Anpressdruck gegen den Reifen gedrückt wird. Fig. 6 zeigt die Induktionsheizeinrichtung 25 in ihrer an einer Spikeposition in einem Profilblock 1 positionierten Lage.

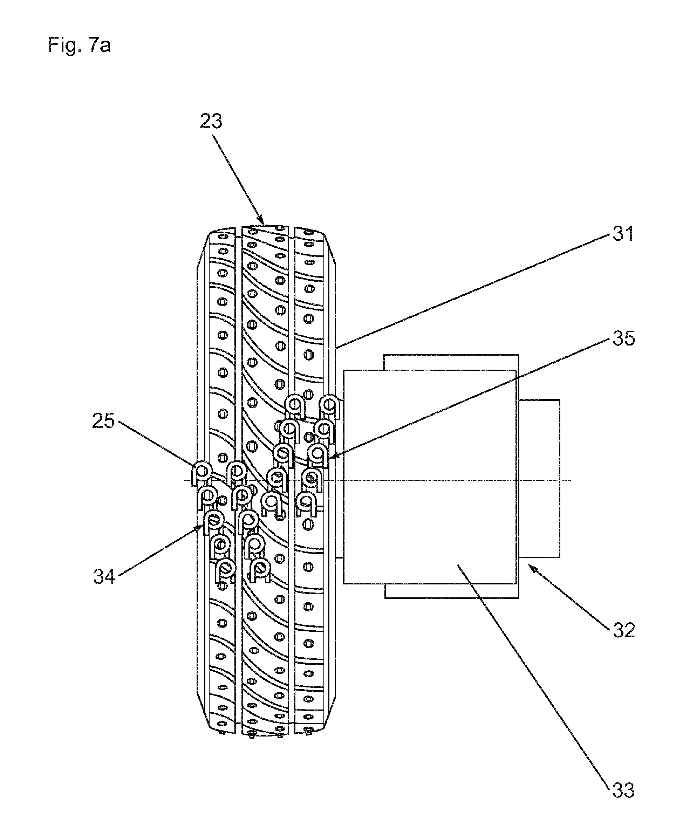

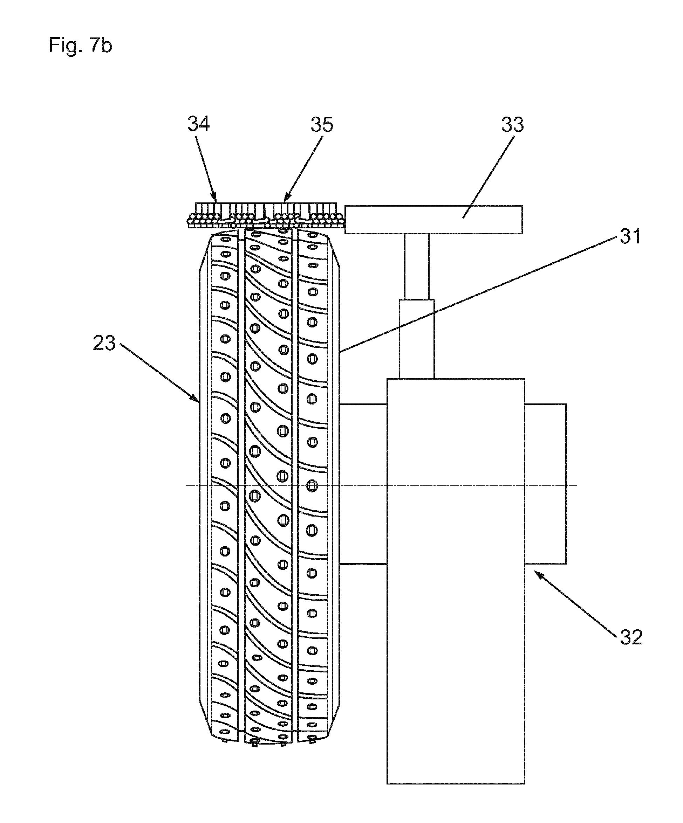

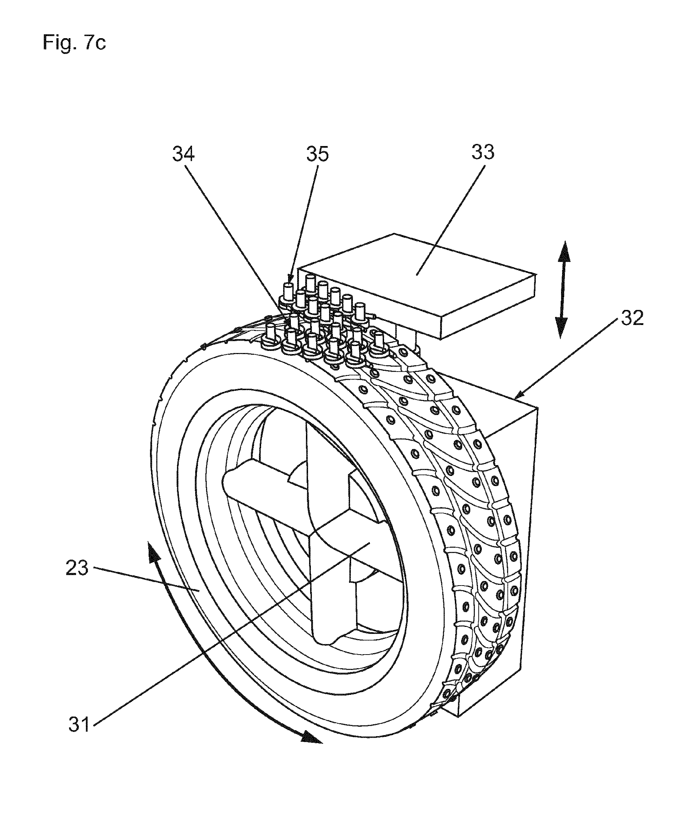

Fig. 7a bis Fig. 7c zeigen schematisch eine Vorrichtung, die ein gleichzeitiges Positionieren mehrerer Induktionsheizeinrichtungen 25 an den Spikepositionen im Laufstreifen eines Reifens 23 ermöglicht. Eine Positionierung jeder einzelnen Induktionsheizeinrichtung 25 ist wegen der randomisierten Positionierung der Spikes 7 im Laufstreifen des Reifen erforderlich. Der Reifen 23 befindet sich auf einer Felge 31, die an einer motorisch betätigbaren Halterung 32 gelagert ist, sodass eine abschnittsweise Drehung des Reifens 23 erfolgen kann. An der Halterung 32 ist eine bezogen auf den Reifen zumindest in radialer Richtung verschiebbare und positionierbare Trägerplattform 33 angeordnet, auf welcher zwei Spulenarrays 34 und 35 voneinander unabhängig bewegbar gelagert sind. Die beiden Spulenarrays 34 und 35 umfassen jeweils eine Anzahl von entsprechend der Positionen der Spikes 7 im Laufstreifen ausgerichteten Induktionsheizeinrichtungen 25, sodass diese auf den Spikes 7 exakt positioniert werden können. Nach der Aktivierung der Haftsysteme werden die Spulenarrays 34, 35 angehoben, der Reifen 23 ein Stück gedreht und die Spulenarrays 34, 35 auf den nächsten Spikes 7 positioniert. Eine Sensorzeile mit Hallsensoren kann vorab die Spikepositionen während einer Radumdrehung ermitteln, sodass die Positionierung der Spulenarrays 34, 35 entsprechend gesteuert werden kann. Eine derartige Vorrichtung kann auch mehr als zwei Spulenarrays aufweisen.

Es sind weitere Verfahren möglich, das Haftsystem der Spikes zu aktivieren, beispielweise durch äußeres Erwärmen des Reifens in einem Umluftofen oder einem Mikrowellenofen, Erwärmung mit Infrarotstrahlung, Heißluft, Heißwasser, Heißdampf, durch Ultraschall, Laser oder Hochfrequenz.

Dem Haftsystem kann ein Fluoreszenzmittel zugesetzt werden, welches bei einer äußeren Bestrahlung mit UV-Licht einer Wellenlänge von beispielsweise 200 nm bis 400 nm leuchtet. Dadurch wird eine nachträgliche Inspektion der bespikten Reifen ermöglicht. Je nach Fluoreszenzmittel kann auch die Farbe des fluoreszierenden Lichts variiert werden. Die Spikes können daher auf diese Weise markiert sein und es können beispielsweise unterschiedlich beschichtete Spikes oder unterschiedlich aufgebaute Spikes voneinander unterschieden werden.

### Bezugsziffernliste

1.........Profilblock
2.........Quernut
2'........Quernut
3.........Umfangsnut
4.........Schrägrille
5.........Einschnitt
6.........Spikeloch
6a ....... Basisabschnitt
6b.......zentraler Abschnitt
6c.......oberer Abschnitt
7.........Spike
8.........Basisteil
9.........Spikekörper
10.......Pin
17.......Trommel
17a.....Gestell
18.......Einfüllöffnung
19.......Felge
20.......Einfüllöffnung
21.......Wanne
21a.....Boden
21'......Wanne
22.......Rohrleitung
23.......Reifen
24.......Gestell
24'......Gestell
24'a....Stange
25.......Induktionsheizeinrichtung
26.......Träger
27.......Basisscheibe
27a ..... Ausnehmung
28.......Stütze
29.......Spule
30.......Positionierelement
31.......Felge
32.......Halterung
33.......Träger
34.......Spulenarray
35.......Spulenarray

## Patentansprüche

1. Verfahren zum Beschichten von Spikes (7) zum nachfolgenden Verankern in einem Laufstreifen eines Fahrzeugluftreifens, wobei die Spikes (7, 7') jeweils einen Basisteil (8, 8'), einen Spikekörper (9, 9') und einen Pin (10, 10') aufweisen und in Spikelöcher (6) im Laufstreifen eingebracht werden, welche bei der Vulkanisation des Reifens in einer Heizpresse ein geformt worden sind, wobei die Spikes (7, 7') vor dem Einbringen in den Laufstreifen mit einem Haftsystem beschichtet werden und unter Pressung des Gummimaterials in die Spikelöcher (6) eingebracht werden, wobei anschließend das Haftsystem bei in den Spikelöchern (6) positionierten Spikes (7, 7') durch Wärme aktiviert wird, sodass eine Haftverbindung der Spikes (7, 7') zum Gummimaterial des Laufstreifens hergestellt wird,
**dadurch gekennzeichnet,**
**dass** die Spikes (7) in eine in Dreh- oder Rüttelbewegung versetzbare Trommel (17) als Schüttgut eingebracht werden, in der Trommel (17) mit dem Haftsystem besprüht werden und anschließend in oder außerhalb der Trommel (17) getrocknet werden.

2. Verfahren nach Anspruch 1, **dadurch gekennzeichnet, dass** die Spikes (7) vor dem Besprühen mit dem Haftsystem in der Trommel (17) mit einem Primer besprüht werden.

3. Vorrichtung zur Beschichtung von Spikes (7) mit einem Haftsystem,
**gekennzeichnet durch**
eine in Dreh- oder Rüttelbewegung versetzbare Trommel (17), in welche die zu beschichtenden Spikes (7) als Schüttgut eingebracht werden,
zumindest eine Einfülleinrichtung (18) zum Einsprühen der Spikes (7) in der Trommel (17) mit dem Haftsystem, gegebenenfalls zur Vorbehandlung mit einem Primer und eine Einrichtung zum Trocknen der beschichteten Spikes (7) in oder außerhalb der Trommel (17).
